Europäisches Patentamt

European Patent Office

Office européen des brevets

(11) Publication number: **0 182 196**
**B1**

# (12) EUROPEAN PATENT SPECIFICATION

(45) Date of publication of patent specification: **16.08.89**

(21) Application number: **85114085.5**

(22) Date of filing: **05.11.85**

(51) Int. Cl.⁴: **G 21 C 3/32,** G 21 C 3/12

(54) **Fuel assembly.**

(30) Priority: **12.11.84 SE 8405640**

(43) Date of publication of application:
**28.05.86 Bulletin 86/22**

(45) Publication of the grant of the patent:
**16.08.89 Bulletin 89/33**

(84) Designated Contracting States:
**CH DE IT LI**

(56) References cited:
**EP-A-0 142 778**
**DE-A-1 816 561**
**FR-A-1 574 351**
**US-A-3 367 840**
**US-A-3 928 126**
**US-E- 27 173**

(73) Proprietor: **AB ASEA-ATOM**
**S-721 83 Västeras (SE)**

(72) Inventor: **Arbrink, Richard**
**Svärdsliljegatan 10A**
**S-722 27 Västeras (SE)**
Inventor: **Nylund, Olov**
**Ragnaröksgatan 17**
**S-720 17 Västeras (SE)**

(74) Representative: **Boecker, Joachim, Dr.-Ing.**
**Rathenauplatz 2-8**
**D-6000 Frankfurt a.M. 1 (DE)**

Courier Press, Leamington Spa, England.

**Description**

The invention relates to a fuel assembly according to the precharacterising part of the claim. A fuel assembly of this kind is known from the FR—A—1 574 351 and also partly from the US—Patent Re 27,173.

In the fuel assembly described in the US—Patent Re 27,173.

In the fuel assembly described in the US—Patent Re 27,173 the connection between the lifting plate and the fuel channel is brought about by providing the upper end of the fuel channel with a plurality of corner members, which are each fixed to a corner of the fuel channel. The corner members each bridge a corner of the fuel channel and make contact with the upper end surface of a corresponding vertical extension fixed to a lifting plate, one of the corner members together with the above-mentioned spacer being fixed to the corresponding extension by means of a bolt which is screwed into a vertical hole provided in the end surface of the extension of the lifting plate.

The provision of the above-mentioned corner members means that the fuel channel can be mounted only after the fuel rods have been brought into their position and that during dismantling the fuel rods cannot be removed until the fuel channel has been detached. This means that the fuel channel cannot be fixed to the bottom part by means of horizontal, threaded bolts or similar fixing members which are not operable from above. When the walls of the fuel channel after some time in operation are deformed in the usual manner, that is, become convex on their outer sides, there is therefore a risk that the hydraulic connection between the fuel channel and the bottom part may become untight.

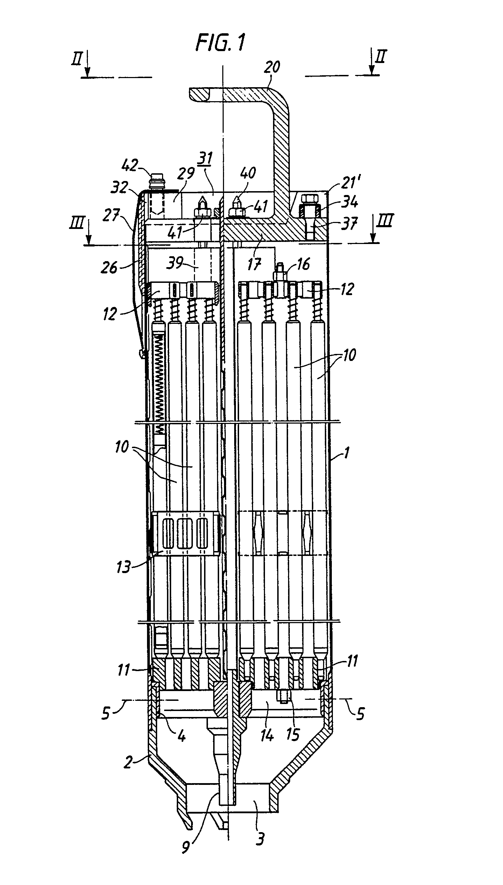

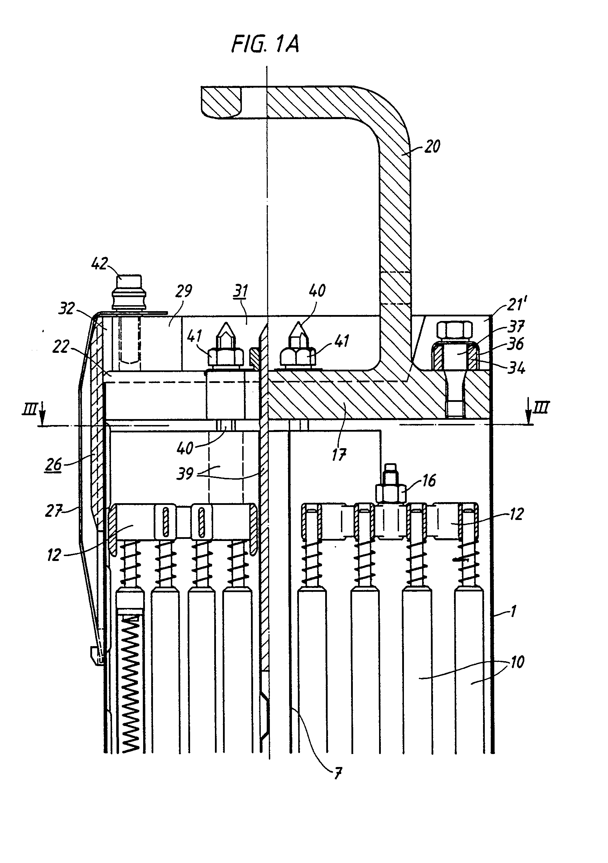

With the fuel assembly according to Figure 1 of the FR—A—1 574 351 the fuel channel is attached to the top tie plate and the bottom tie plate by means of rivets or screws. A lifting handle is attached to the upper tie plate. A removal of the fuel channel is only possible after the fuel assembly has been extracted from the reactor core to make said screws accessible.

The invention aims at designing a fuel assembly of the above-mentioned kind in which the afore-mentioned drawbacks are eliminated.

In order to achieve this aim the invention suggests a fuel assembly according to the introductory part of the claim, which is characterized by the features of the characterizing part of the claim.

The invention will now be described in greater detail with reference to the accompanying drawings showing in

Figure 1 a first embodiment of a fuel assembly according to the invention in vertical section along the line I—I in Figure 2;

Figure 1A on an enlarged scale a detail of Figure 1;

Figure 2 the same fuel assembly in a view perpendicular to a horizontal plane along the line II—II in Figure 1;

Figure 3 a horizontal section along the line III—III in Figure 1;

Figure 4 a view from above on a lifting plate included in the fuel assembly shown in Figures 1—3;

Figure 5 the same lifting plate as in Figure 4 seen in the direction indicated by the arrow V;

Figure 6 the same lifting plate in a view perpendicular to a vertical plane through the line VI—VI in Figure 4;

Figure 7 a view from above on a spacer included in the fuel assembly shown in Figures 1—3;

Figure 8 a vertical section along the line VII-I—VIII in Figure 7;

Figure 9 a horizontal view of the above-mentioned spacer in the direction IX in Figure 7;

Figure 10 the same spacer in a horizontal view in the direction X in Figure 7;

Figure 11 a reactor module of a boiling water reactor in a view from above. From fuel assemblies designed according to Figures 1, 2, 3 are each positioned by means of a spacer designed according to Figures 7—10;

Figure 12 in vertical section along the line XII—XII in Figure 13 an upper portion of a fuel assembly according to a second embodiment of the invention;

Figure 13 the fuel assembly in Figure 12 seen from above;

Figure 14 an upper portion of the fuel assembly in Figure 12 in a horizontal side view. The part of the fuel assembly according to Figures 12—14 which is not shown is designated in the same way as the corresponding portion of the fuel assembly shown in Figures 1—3;

Figure 15 a vertical section along the line XV—XV in Figure 16 of an upper portion of a fuel assembly according to a third embodiment of the invention. The part of this fuel assembly which is not shown is designed in the same way as the corresponding part of the fuel assembly shown in US—A—3,697,375;

Figure 16 the fuel assembly shown in Figure 15 in a view from above, and

Figure 17 an upper portion of the same fuel assembly in a horizontal side view.

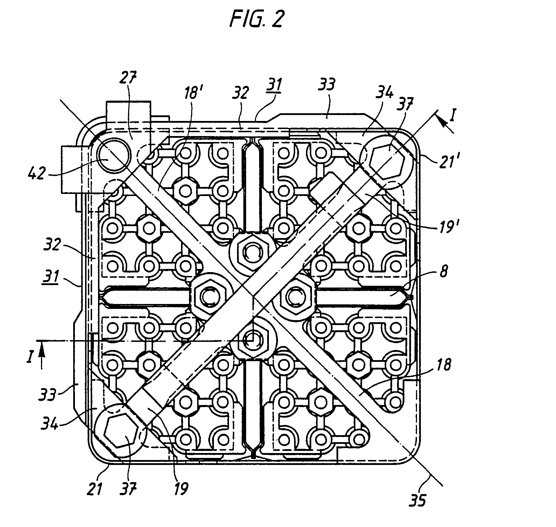

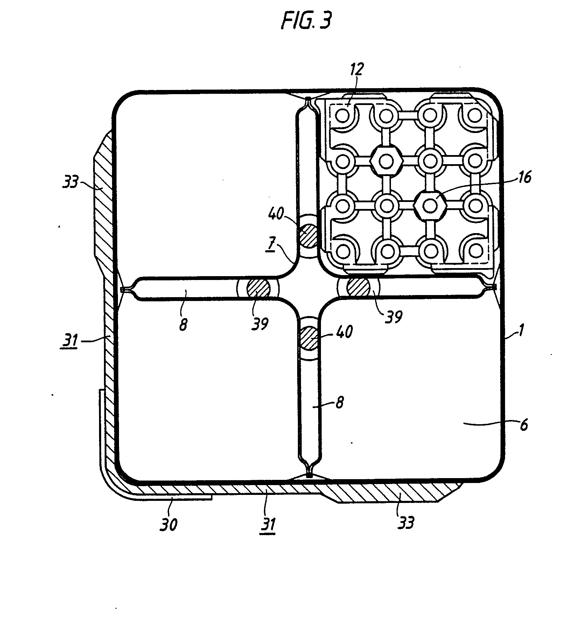

In Figures 1—11, 1 designates a fuel channel having a substantially square cross-section. The fuel channel 1 surrounds, without any significant play, an upper portion of a bottom part 2 having a circular, downwardly-facing inlet opening 3 for cooling water and moderator water. In addition to the fuel channel 1 the bottom part 2 supports a supporting plate 4. The lowermost part of the fuel channel 1 is provided with a relatively thick wall portion which is fixed to the bottom part 2 and the supporting plate 4 by means of a plurality of horizontal bolts, indicated by the dash-dotted lines 5. The fuel channel 1 is divided into four vertical sub-channels 6 by means of a hollow channel member 7 with cruciform cross-section which is welded to the four walls of the fuel channel 1 (Figure 3). The channel member 7 has four hollow wings 8. At its bottom the channel member 7 is connected to an inlet tube 9 for moderator water. The sub-channels 6 each contain a sub-bundle of sixteen fuel rods 10. In addition, each sub-bundle contains a grid-like bottom tie plate 11, a grid-like top tie plate 12 and a plurality of spacers 13. The four bottom tie plates 11 are supported by the supporting plate 4, and are each partially inserted into a square hole 14 therein. In each sub-bundle at least one of the fuel rods is made with relatively long, threaded end plugs, of which the lower end plug is passed through the bottom tie plate 11 and provided with a nut 15, whereas the upper end plug is passed through the top tie plate 12 and provided with a nut 16.

An upper end portion of the fuel channel 1 surrounds a cruciform lifting plate 17 with four horizontal arms 18, 18', 19, 19' extending from a common central portion. At its outer end each arm is formed with an arrow-shaped portion, which makes contact with the inner wall surface of the fuel channel 1 in a respective corner of the fuel channel. A lifting handle 20 is fixed to the arms 19 and 19'. The lifting plate 17 and the handle 20 together form an integrally cast lifting member of steel. The fuel channel 1 has two mutually identical, vertical lugs 21 and 21', each of which is located at the end portions of the arms 19 and 19', and each of which is symmetrical with respect to a vertical diagonal plane. Further, the upper edges of the fuel channel 1 is located at one and the same level. The end portions of the arms 18 and 18' are each provided at their top part with a horizontal projecting flange 22 and 22', respectively, each of which rests on a corner portion of the fuel channel 1. The end portions of the arms 19 and 19' are each provided with a vertical threaded through-hole 23 and 23', respectively, each of which has an upper portion with an outwardly diverging conical portion. Four vertical through-holes 25 are provided in the mid-portion of the lifting plate.

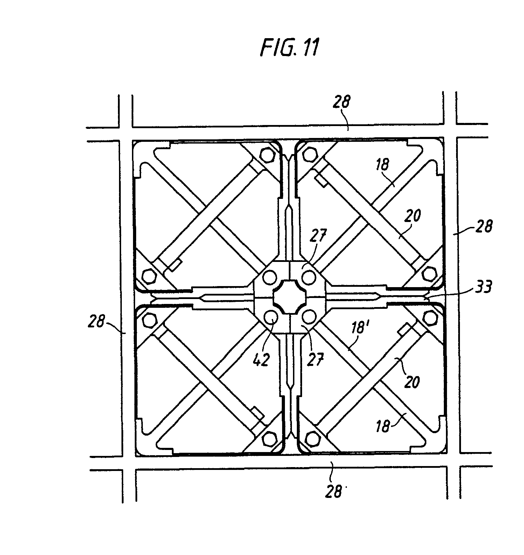

The fuel assembly shown in Figures 1—3 is provided with a solid-cast spacer 26, the task of which is to maintain a constant distance between adjacent fuel assemblies. In addition, the spacer 26 serves as a fixing member for retaining the fuel channel 1 in relation to the lifting plate 17 and as attachment for a spring member 27, arranged to press the fuel assembly against each side 28 (Figure 11) of a square core grid.

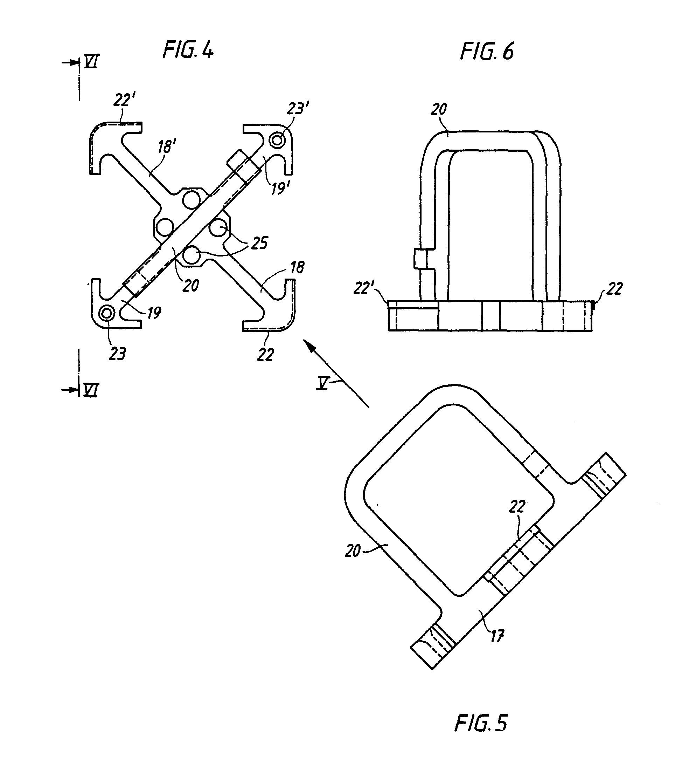

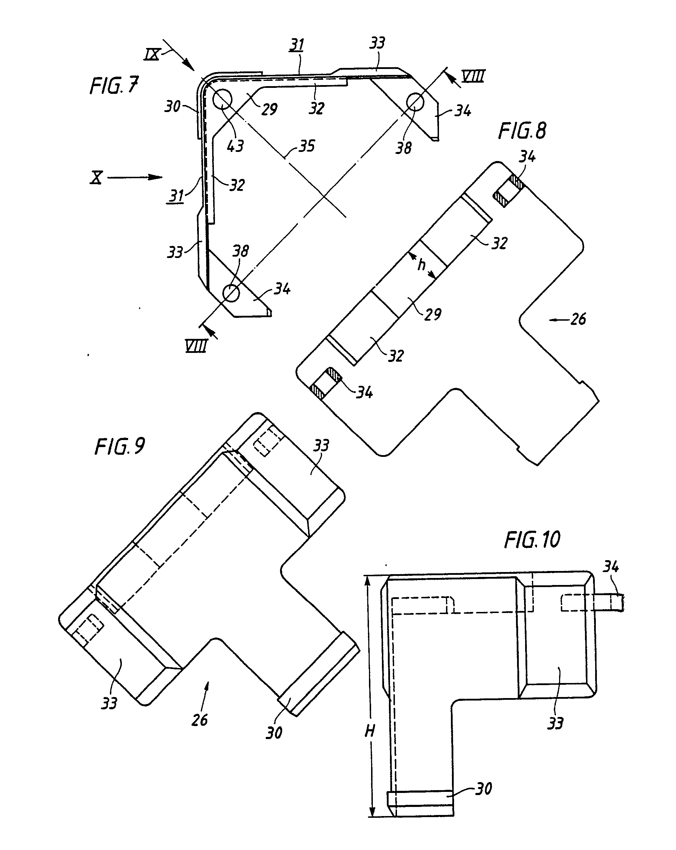

The spacer 26 is provided at the top with a prismatic portion 29 which in the horizontal section exhibits an approximately triangular cross-section (Figure 6) and has a vertical dimension h (Figure 8). The prismatic portion 29 constitutes part of the corner portion of the spacer 26, the total vertical dimension H of which is approximately six times h. At the bottom the corner portion has a flange 30. Along a major part of the vertical extension H, the above-mentioned corner portion has an L-shaped horizontal sectional area. From the corner portion extend two arms 31, which in a vertical view make an angle of 90° with each other. Each arm 31 includes an upper arm portion 32, which extends horizontally from the prismatic portion 29 and which, in the same way as the prismatic portion 29, is arranged vertically above the upper edge of the fuel channel 1. Below the arm portion 32 each arms makes contact — along its entire horizontal extension — with the outer side of a corresponding fuel channel wall. At its outermost end each arm 31 is formed with a relatively thick end portion 33, the task of which is to serve as a distance block. From each end portion 33 extends a corresponding horizontal projection 34 formed with rectangular vertical cross-section. The projections 34 are directed parallel to an imaginary vertical diagonal plane 35 through the fuel channel 1. The imaginary vertical plane 35 passes through the spacer 26 and constitutes a symmetry plane therefor.

The above-mentioned lugs 21 and 21' of the fuel channel 1 are each provided with two through-holes 36 for a corresponding projection 34, each projection 34 — in a corresponding corner of the fuel channel 1 — being inserted into the fuel channel 1 through one of the two holes 36 and extending with its end portion in the other hole. In this way a direct mechanical connection is achieved between the fuel channel 1 and the spacer 26. The projections 34 make contact with corresponding upwardly-facing surfaces of the arm 19 and 19', respectively, of the lifting plate 17 and are each fixed to the plate by means of a threaded, vertical bolt 37. Each bolt 37 is passed, with a certain play, through a corresponding hole 38 in the projection 34 and screwed into a corresponding hole 23 and 23', respectively, in the lifting plate 17.

The spacer 26 is thus arranged in mechanical connection with the fuel channel 1 and the lifting plate 17. These connections are sufficiently strong for transmitting the entire lifting force from the lifting plate 17 to the fuel channel 1 when the fuel assembly is raised. The necessary transmission of the lifting force between the fuel channel 1 and the bottom part 2 is performed solely with the aid of the bolts indicated by the dash-dotted lines 5 in Figure 1.

In order to achieve a redundant connection between the fuel channel 1 and the lifting plate 17, four vertical bars 39 (Figures 1A and 3) are inserted each into one of the hollow wings 8 of the channel member 7 and are welded thereto. At its uppermost part each bar 39 has a vertical, bolt-like portion 40 which is passed with a certain play through a corresponding hole 25 in the mid-portion of the lifting plate 17 and provided with a nut 41. Alternatively, instead of the four bars 39, one single central bar can be used, the four holes 25 then being replaced by one single, central hole. The spring member 27 is fixed to the spacer 26 by means of a vertical bolt 42, which is inserted into a corresponding hole 43 in the above-mentioned prismatic portion 29.

For removal of the fuel rods from the fuel assembly, the latter is moved to a special service pool, whereafter the bolts 37 are loosened and removed. Then a diagonally directed horizontal force is applied on the spacer 26 to withdraw the projections 34 from the holes 36 in the fuel channel wall, whereupon the spacer is removed. When the nuts 41 have been loosened and removed the lifting plate 17 can also be removed, whereupon the above-mentioned sub-bundles can be lifted and removed individually.

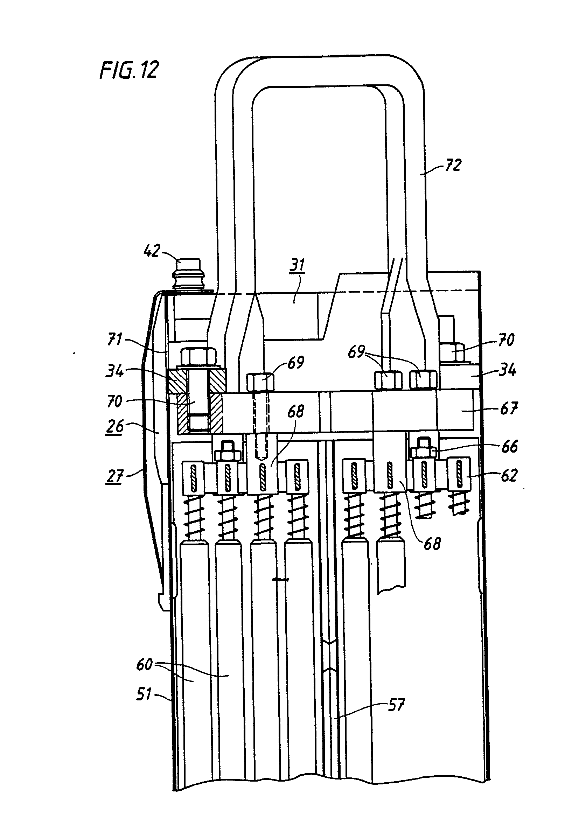

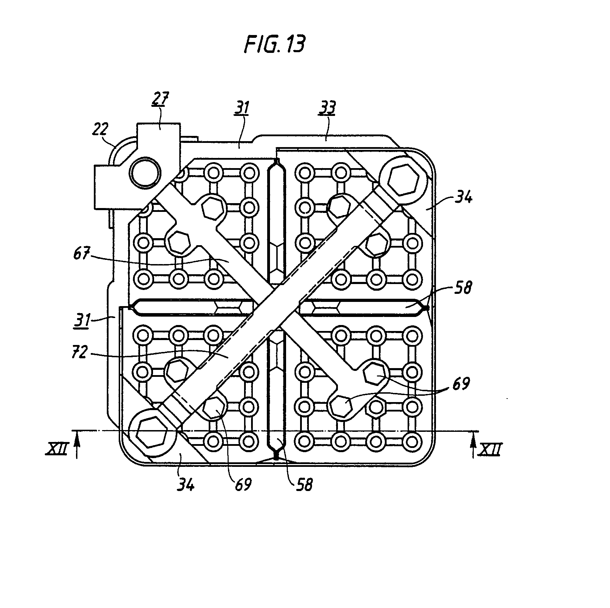

In the fuel assembly shown in Figure 12—14 there is used a spacer 26 designed in the same way as the spacer described above, and the same reference numerals are used for the parts of the two spacers. The fuel assembly has a fuel channel 51 with an approximately square cross-section. The fuel channel 51 is divided into four sub-channels by means of a hollow channel member 57 with four hollow wings 58, each of said sub-channels including a sub-bundle with sixteen fuel rods 60. Each sub-bundle has a bottom tie plate of the same design as that shown in Figure 1, and a top tie plate 62. In each sub-bundle two of the fuel rods are constructed with relatively long top end plugs and bottom end plugs. These plugs are passed through the top tie plate and the bottom tie plate, respectively, and are provided with nuts 66. Each top tie plae 62 is provided with two vertical, upwardly-directed and mutually identical projections 68, which constitute integral parts of the top tie plate. A cruciform lifting plate 67 makes contact with the end surfaces of the projections 68 and is fixed to the top tie plates by means of four threaded bolts 69, each passed through a hole in the lifting plate 67 and screwed into a threaded hole in a projection 68. A lifting handle 72 is cast integrally with the lifting plate 67.

In a manner similar to the fuel assembly shown in Figures 1—3, the horizontal projections 34 of the spacer 26 each make contact with an upwardly-facing surface of the lifting plate 67. The projections 34 are each fixed to the lifting plate 67 by means of a vertical bolt 70, which is screwed to the lifting plate 67. In a manner similar to the fuel assembly shown in Figures 1—3, the projections 34 are arranged in a direct mechanical connection with the fuel channel 51 by the provision of two holes 71 in each side surface of the fuel channel 51, which two holes at each corner of the fuel channel 51 surround the projections 34. However, in the embodiment according to Figures 12—14 these holes 71 are dimensioned in such a way that a large vertical gap occurs in the mechanical connection between the horizontal projections 34 and the fuel channel 51. this gap is larger than 40 mm, preferably larger than 80 mm. The reason for the need of such a large play resides in the fact that the length of the fuel rods increases considerably after some time in operation. Since the top tie plates 62 are arranged in a rigid mechanical connection with the lifting plate 67, it is an absolute necessity that the plate is able to move upwards; otherwise, the fuel rods would become bent. Each hole 71 preferably has an axial dimension M which is at least twice as large, preferably at least thrice as large as the vertical dimension of the portion of the projection 34 surrounded by the hole 71. When applying a lifting force to the handle 72, initially only the lifting plate, the spacer and the four sub-bundles are lifted. When the projections 34 have been brought into contact with the upper edges of the holes 71, also the fuel channel 51, and the bottom part attached thereto, are lifted. When the fuel rods are to be lifted out, the spacer 26 is first removed, whereupon all the sub-bundles are lifted out of the fuel channel 51 simultaneously by means of a lifting force applied to the handle 72.

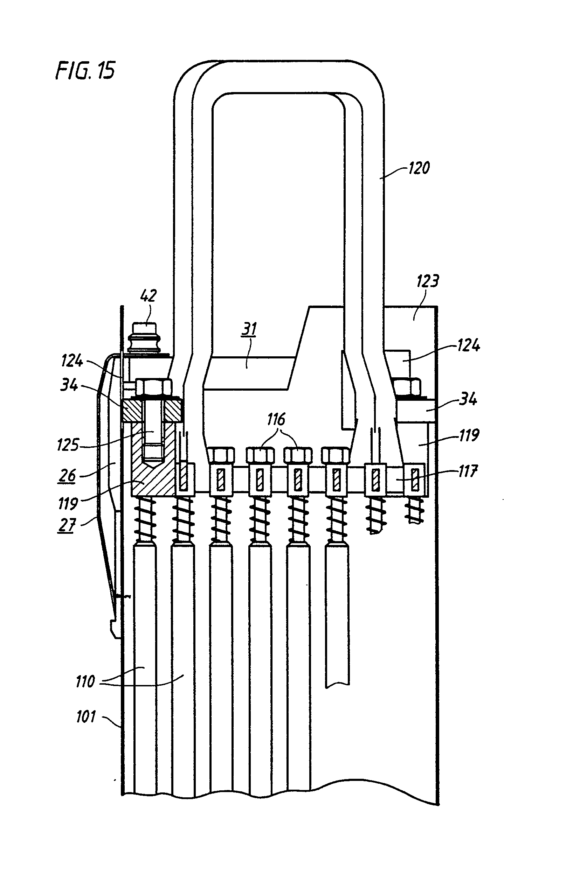

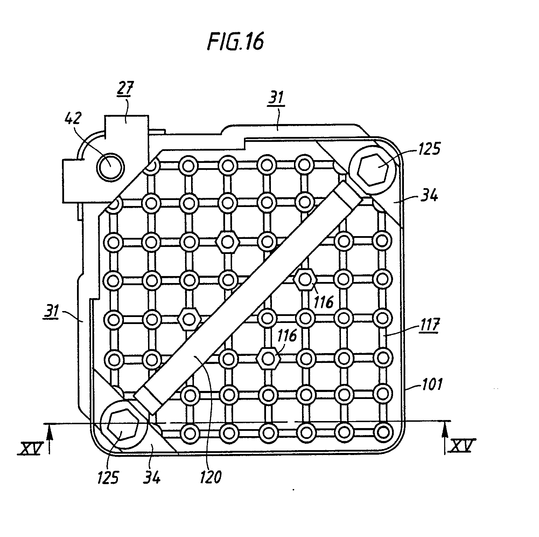

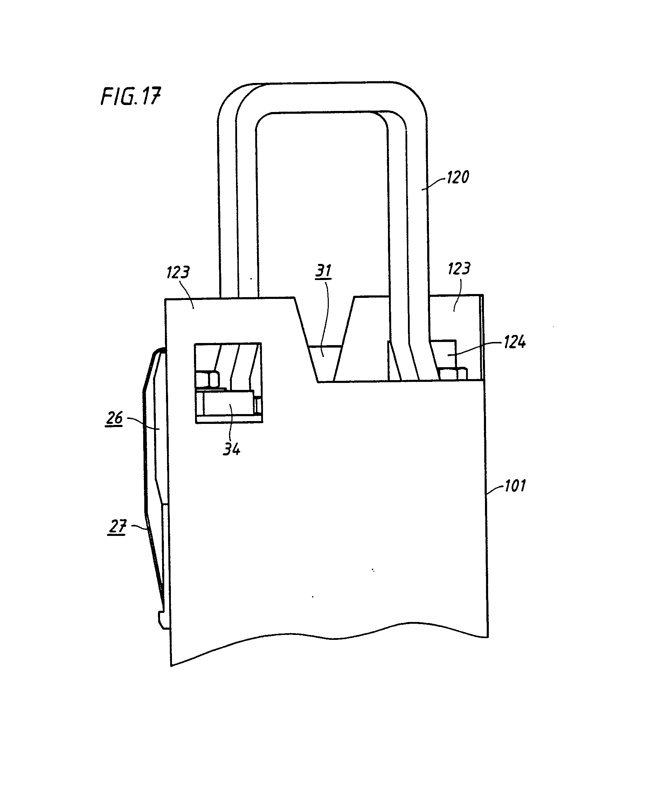

The spacer 26 described above is also used with the fuel assembly shown in Figures 15—17. This fuel assembly has a plurality of fuel rods 110, which are enclosed within a fuel channel 101 formed with an approximately square cross-section. The fuel assembly has a square lifting plate 117 which is provided with a lifting handle 120 cast integrally with the lifting plate. The lifting plate 117 is provided with a plurality of vertical through-holes, into which the upper end parts of the fuel rods are inserted, all the fuel rods being positioned by means of the lifting plate 117. Some of the fuel rods are designed as support rods. These have relatively long end plugs, the upper ends of which being passed through the lifting plate 117 and being each provided with a nut 116. The lower end plugs of the support rods are passed in a similar manner through a bottom tie plate and are provided with nuts. In the same way as with the fuel assembly described in the above-mentioned U.S. patent specification the low bottom tie plate is supported by a bottom part which is surrounded by the lower end of the fuel channel 101 and is fixed thereto by means of a plurality of horizontal bolts.

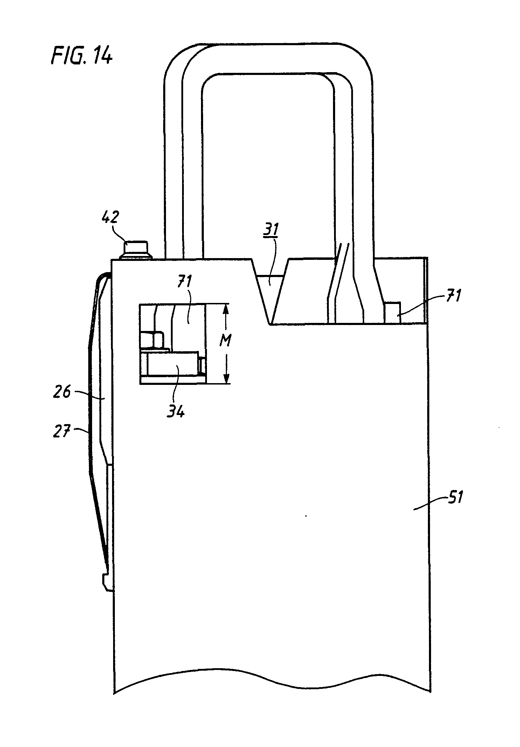

The top tie plate 117 has two vertical, mutually identical projections 119, which are each provided in one of two corners located diagonally in relation to each other. The corresponding corners of the fuel channel 101 are each provided with a lug 123 which, in the same way as the lugs in the fuel assemblies described above, constitute an extended corner portion of the fuel channel 101. Each lug 123 is provided with two rectangular openings 124, which are dimensioned in the same way as the corresponding openings 71 in the fuel assembly shown in Figure 14. The horizontal projections 34 of the spacer 26 each make contact with an upwardly-facing surface of a vertical projection 119 extending upwardly from the lifting plate 117 and are fixed to this projection 119 by means of a threaded, vertical bolt 125 which is screwed into this projection 119.

When a lifting force is applied to the handle 120, the lifting plate 117, the bottom tie plate and all the fuel rods are first lifted. When the projections 34 have been brought into contact with the upper edge of the holes 124, also the fuel channel 101 and the bottom part attached thereto are lifted. When the fuel rods are to be lifted out of the fuel channel 101, the spacer 26 is first removed, whereupon a lifting force is applied to the handle 120.

In addition to the fuel assemblies described above, the invention comprises a large number of embodiments not shown in the drawings. Thus, for example, the lifting plate or the handle attached thereto may be provided with holes into which the horizontal projections of the spacer are inserted simultaneously with being inserted into the holes provided in the walls of the fuel channel. Furthermore, it is not necessary to provide two through-holes in the fuel channel for each projection. One through-hole may be replaced by an embossed indentation or by a bracket-like, for example embossed, projection on the inner side of the fuel channel wall.

## Claim

A fuel assembly comprising a plurality of fuel rods (10), a fuel channel (1) having a substantially square cross-section, a bottom tie plate (11), a bottom part (2) formed with a downwardly-facing inlet opening (3) for cooling water, said fuel channel (1) being fixed to said bottom part (2) by means of a plurality of horizontally directed bolts (5) or the like, a lifting plate (17) surrounded by said fuel channel (1) and provided with a lifting handle (20), said fuel rods being surrounded by said fuel channel (1) and supported by said bottom tie plate which in turn is supported by said bottom part (2), said lifting plate (17) being arranged in a tensile-force transmitting connection with said bottom tie plate means, said fuel channel (1) being arranged in a mechanical connection with said lifting plate (17), characterized in that there is a spacer (26) with a corner portion (29) and two arms (31) extending horizontally and perpendicularly to each other from said corner portion, said spacer (26) being arranged with said corner portion (29) in a first corner of said fuel channel (1) with each of said arms (31) extendng along an outer side of said fuel channel (1), that a mechanical connection between said spacer (26) and said lifting plate (17) and a mechanical connection between said spacer (26) and said fuel channel (1) are broght about by means of two horizontal projections (34), each extending from one of said arms (31) and each passing through holes (36) of the lugs (21, 21') of one fuel channel wall, that each of said projections (34) is directed parallel to an imaginary, vertical diagonal plane through said first corner of said fuel channel (1) and positioned for the most part inside the fuel channel (1), and that said projections (34) are fixed to said lifting plate (17) by means of a detachable mechanical connection (37) which is accessible and operable from above.

## Patentanspruch

Brennelementbündel mit einer Vielzahl von Brennstäben (10), mit einem Brennstoffkanal (1), der einen im wesentlichen quadratischen Querschnitt hat, mit einer Bodenverbundplatte (11), mit einem Bodenteil (2), welches mit einer nach unten gerichteten Einlaßöffnung (3) für Kühlwasser versehen ist, wobei der vorgenannten Brennstoffkanal (1) an dem Bodenteil (2) mittels einer Vielzahl horizontal gerichteter Bolzen (5) oder dergleichen befestigt ist, mit einer Hebeplatte (17), die von dem Brennstoffkanal (1) umgeben ist und mit einem Hebegriff (20) versehen ist, wobei die Brennstäbe von dem Brennstoffkanal (1) umgeben sind und von der genannten Bodenverbundplatte getragen werden, die ihrerseits von dem Bodenteil (2) getragen wird, und wobei die Hebeplatte (17) in einer Zukräfte übertragenden Verbindung mit der Bodenverbundplatte steht und der Brennstoffkanal (1) in einer mechanischen Verbindung mit der Hebeplatte (17) steht, dadurch gekennzeichnet, daß ein Abstandshalter (26) mit einem Eckabschnitt (29) und zwei Armen (31) vorhanden ist, welche Arme sich horizontal und senkrecht zueinander von dem genannten Eckabschnitt ausgehend erstrecken, daß der Abstandahalter (26) mit dem Eckabschnitt (29) in einer ersten Ecke des Brennstoffkanal (1) angeordnet ist, wobei jeder der Arme (31) sich längst einer äußere Seite des Brennstoffkanals (1) erstreckt, daß eine mechanische Verbindung zwischen dem Abstandshalter (26) und der Hebeplatte (17) und eine mechanische Verbindung zwischen dem Abstandshalter (26) und dem Brennstoffkanal (1) mittels zweier horizontaler Vorsprünge (34) zustande gebracht wird, von denen jeder sich von einem der Arme (31) erstreckt und jeder durch Löcher (36) in den Ansätzen (21, 21') einer Brennstoffkanalwand hindurchgeht, daß jeder der Vorsprünge (34) sich parallel zu einer gedachten vertikalen Diagonalebene durch die genannte erste Ecke des Brennstoffkanals (1) erstreckt und überweigend innerhalb des Brennstoffkanals (1) liegt, und daß die Vorsprünge (34) an der Hebeplatte (17) mittels einer lösbaren mechanischen Verbindung (37) befestigt sind, die von oben zugänglich und betätigbar ist.

## Revendication

Un assemblage combustible comprenant un ensemble de crayons combustibles (10), un canal de combustible (1) ayant une section transversale pratiquement carrée, une plaque de liaison supérieure (11), un embout inférieure (2) comportant une ouverture d'entrée (3) dirigée vers le bas, pour l'eau de refroidissement, ce canal de combustible (1) étant fixé à l'embout inférieur (2) par un ensemble de vis (5) ou d'éléments analogues, dirigés horizontalement, une plaque de levage (17) entourée par le canal de combustible (1), et munie d'une poignée de levage (20), les crayons combustibles étant entourés par le canal de combustible (1) et supportés par la plaque de liaison inférieure qui est elle-même supportée par l'embout inférieur (2), le plaque de levage (17) ètant accouplée à la plaque de liaison inférieure de manière à transmettre les forces de traction, et le canal combustible (1) étant accouplé mécaniquement à la plaque de levage (17), caractérise en ce qu'il existe une entretoise (26) comportant une région de coin (29) et deux branches (31) qui s'étendent horizontalement et perpendiculairement l'une a l'autre, à partir de la région de coin, cette entretoise (26) étant placée avec la région de coin (29) dans un premier coin du canal de combustible (1), de façon que chacune des branches (31) s'étende le long d'un côté extérieur du canal de combustible (1), en ce qu'un accouplement mécanique entre l'entretoise (26) et la plaque de levage (17) et un accouplement mécanique entre l'entretoise (26) et le canal de combustible (1) sont établis au moyen de deux saillies horizontales (34), chaque d'elles s'étendant à partir de l'une des branches (31) et traversant des trous (36) de pattes (21, 21') d'une paroi du canal de combustible, en ce que chaque des saillies (34) est dirigée parallèlement à un plan vertical diagonal imaginaire qui passe par le premier coin du canal de combustible (1), et est placée en majeure partie à l'intérieur du canal de combustible (1), et en ce que ces saillies (34) sont fixées à la plaque de levage (17) au moins d'un accouplement mécanique détachable (37) qui est accessible, et peut être actionné, par le haut.

EP 0 182 196 B1

FIG.1

## FIG. 1A

FIG. 2

FIG. 3

FIG.4

FIG.6

FIG.5

EP 0 182 196 B1

FIG. 7

FIG. 8

FIG. 9

FIG. 10

6

FIG. 11

FIG.12

FIG. 13

FIG. 14

42

31

71

71

M

26

34

27

51

FIG. 15

120

123

42

31

124

34

116

124

34

119

125

26

119

27

117

110

101

FIG.16

FIG.17